# EUROPÄISCHE PATENTSCHRIFT

(11) **EP 1 454 447 B1**
(45) Veröffentlichungstag und Bekanntmachung des Hinweises auf die Patenterteilung: **18.04.2007**
(21) Anmeldenummer: 02787369.4
(22) Anmeldetag: 18.11.2002
(51) Int. Cl.: H04L 1/00

(54) **VERFAHREN ZUR FEHLERKORREKTUR BEI EINER PAKETORIENTIERTEN DATENÜBERTRAGUNG MIT DURCH DESKRIPTOREN NÄHERER BESTIMMTEN ÜBERTRAGUNGSBLÖCKEN**
METHOD FOR ERROR CORRECTION IN PACKET-ORIENTED DATA TRANSMISSION WITH TRANSMISSION BLOCKS THAT ARE BETTER DETERMINED BY DESCRIPTORS
PROCEDE DE CORRECTION D'ERREURS LORS D'UNE TRANSMISSION DE DONNEES ORIENTEE PAQUETS AU MOYEN DE BLOCS DE TRANSMISSION DETERMINES PLUS PRECISEMENT A L'AIDE DE DESCRIPTEURS

(30) Priorität: 21.11.2001 DE 10157053
(43) Veröffentlichungstag der Anmeldung: 08.09.2004
(73) Patentinhaber: SIEMENS AKTIENGESELLSCHAFT, 80333 München (DE)
(72) Erfinder: LIEBL, Günther, 85356 Freising (DE); WENG, Wenrong, 85521 Ottobrunn (DE); WAGNER, Marcel, 80335 München (DE); PANDEL, Jürgen, 83620 Feldkirchen-Westerham (DE)
(86) Internationale Anmeldenummer: PCT/DE2002/004242
(87) Internationale Veröffentlichungsnummer: WO 2003/047147

(56) Entgegenhaltungen:
- EP-B- 1 305 905
- WO-A-02/11350
- US-B1- 6 249 895

## Beschreibung

Die Erfindung betrifft ein Verfahren zur Fehlerkorrektur, bei der in einem Übertragungsblock enthaltene Deskriptoren Codeworte dieses Übertragungsblocks gleicher Korrekturfähigkeit in Untermengen zusammenfassen und die Größe der Untermenge sowie den Unterschied in der Korrekturfähigkeit der Untermenge beschreiben.

Bei der paketorientierten Übertragung von Daten kommt es im Allgemeinen bei Festnetzen wegen einer Überlast an Netzknoten und bei mobilen Kanälen durch atmosphärische Störungen und Mehrwegeausbreitungen zu Bitfehlern, die durch fehlererkennende Codes detektiert werden und zum Verwerfen von ganzen Paketen führen. Sogenannte Reliable Transport Protocols wie TCP verwenden Wiederholmechanismen (Automatic Repeat Request-Verfahren) um verloren gegangene oder verworfene Pakete trotz gestörter Kanäle sicher zum Empfänger transportieren zu können. Dies ist jedoch mit einem sehr erheblichen Zuwachs an Übertragungsverzögerung (Delay) verbunden, der aber, insbesondere bei Kommunikationsanwendungen, nicht toleriert werden kann. Hier kommen deshalb Unreliable Transport Protocols, zum Beispiel UDP, zum Einsatz. Diese verursachen zwar keinen Zuwachs an Übertragungsverzögerung, bieten dafür aber auch keinerlei Mechanismen, Paketverluste auszugleichen. In der Audio Visual Transport Group (AVT) der IETF gibt es seit einiger Zeit deshalb intensive Bestrebungen, Verfahren zur Vorwärtsfehlerkorrektur (FEC) und paketorientierten Übertragung mit Unreliable Transport Protocols zu verbinden. Hierbei werden beispielsweise mehrere Datenpakete in einem Schritt codiert und die daraus resultierenden z Codeworte cwᵢ, mit 0≤i<z, der Länge N in einem Speicherfeld derart angeordnet, dass die Codeworte die Zeilen oder Spalten einer zxN bzw. Nxz Matrix bilden. Daraufhin werden Spalten bzw. Zeilen auf Pakete eines Transport Layers, zum Beispiel RTP/UDP, abgebildet und übertragen. Um eine quellenadaptive Codierung zu erzielen können die Codeworte cwᵢ einer Matrix einen unterschiedlichen Schutz gegen Fehler bzw. Auslöschungen aufweisen.

Wird im Folgenden die Korrekturfähigkeit eines Codewortes cwᵢ mit epᵢ bezeichnet, dann beschreibt ein sogenanntes Fehlerschutzprofil EPP die Korrekturfähigkeit der Menge der Codeworte, die in einer Matrix EPP={ep₀, ep₁, ... ep_{z-1}} zusammengefasst sind. Das Fehlerschutzprofil zweier aufeinander folgender Matrizen oder Übertragungsblöcke kann unterschiedlich sein, sei es um den Fehlerschutz an die Quelle oder auch an den Kanal anzupassen. Um aber am Empfänger die Codeworte eines Übertragungsblocks decodieren zu können, muss dem Decoder das entsprechende Fehlerschutzprofil bekannt sein bzw. übertragen werden. Dies setzt eine zuverlässige Signalisierung voraus. Diese sollte effizient sein, um den zusätzlichen Overhead so gering wie möglich zu halten. Im Header eines jeden Übertragungspakets hierfür eine genügend große Anzahl von Feldern zu übertragen, wäre sehr ineffizient und eine Übertragung außerhalb des logischen Kanals (out-of-band signaling) bedeutet einen zusätzlichen Aufwand. Deshalb werden besser Deskriptoren verwendet, die Codeworte eines Übertragungsblocks gleicher Korrekturfähigkeit in einer Untermenge zusammenfassen und die Größe der Untermenge sowie den Unterschied in der Korrekturfähigkeit der zuvor angegangenen Untermenge beschreiben (differentielle Beschreibung), wie dies aus der nachveröffentlichten EP 1 305 905 mit den Wirkungen gemäß Art. 54(3) EPÜ bekannt ist.

Aus der US 6 249 895 sind Vorrichtungen zur Kodierung und Dekodierung bekannt, welche eine Synchronisation zwischen Kodierung und Dekodierung, eine Effizienz der Kodierung sowie eine Erhöhung einer Informationsqualität ermöglichen. Insbesondere ist hieraus bekannt, in einem Header eine den jeweils verwendeten Korrekturkode angebende Information zu übertragen.

Die der Erfindung zugrunde liegende Aufgabe besteht nun darin, ein Verfahren zur Fehlerkorrektur einer paketorientierten Übertragung anzugeben, das im Dekoder eine bessere Rekonstruierbarkeit der Daten aus den Übertragungsblöcken sowie eine bessere Ausnutzung der Übertragungsblöcke ermöglicht.

Diese Aufgabe wird erfindungsgemäß durch die Merkmale des Patentanspruchs 1 gelöst. Vorteilhafte Weiterbildungen der Erfindung ergeben sich aus den weiteren Ansprüchen.

Die Erfindung beruht im Wesentlichen darauf, dass zusätzlich Deskriptoren verwendet werden, die nicht nur, wie die bekannten Deskriptoren, die Größe der Untermenge sowie den Unterschied in der Korrekturfähigkeit beschreiben, sondern auch eine definierte Trennung zwischen einem Signalisierungsblock und mindestens einem Datenblock sowie die Positionen der Auffüllbits innerhalb eines Übertragungsblocks bzw. Datenblocks kennzeichnen.

Die Erfindung wird nachfolgend anhand eines Ausführungsbeispiels näher erläutert.

Das Fehlerschutzprofil EPP des Übertragungsblocks lautet hier Epp={7,7,7,7,4,4,4,4,4,4,4,4,4,4,3,3,3,3,6,6,6,6,6,6,0,0,0,0, 0,0,0}. Ein Datenblock B1 benötigt die oberen 18 Zeilen, wobei in der 18. Zeile die S1=3 letzten Datenbytes ignoriert werden sollen und weiterer Datenblock B2 benötigt die restlichen Zeilen, wobei in der letzten Zeile S2=10 Bytes ignoriert werden sollen.

Ein Übertragungsblock B weist in diesem Beispiel N=28 Datenpackete mit jeweils z=32 Symbolen oder Bytes b auf, wobei der Übertragungsblock B erfindungsgemäß immer in einen Signalisierungsblock SB und in nachfolgende Datenblöcke, beispielsweise die Datenblöcke B1 und B2, eingeteilt ist. Diese Datenblöcke können beispielsweise P-frames, B-frames oder I-frames von MPEG-codierten Videobildfolgen sein.
In diesem Beispiel weist der Signalisierungsblock nur z1=1 Zeilen, der Datenblock B1 m1=18 Zeilen und der Datenblock B2 m2=13 Zeilen auf.

Bei dem erfindungsgemäßen Verfahren werden zunächst Deskriptoren in an sich bekannter Weise aus dem Fehlerschutzprofil ermittelt. Diese bekannten Deskriptoren bestehen jeweils aus einem Byte. Die Informationen n und ep werden jeweils mit 4 Bit codiert, wobei n vom Typ unsigned und ep vom Typ signed ist. Wie aus dem EPP hervorgeht, besteht die erste Untermenge von Codeworten aus 4 Codeworten, die eine Korrekturfähigkeit von 7 haben, die damit um 7 kleiner ist als ein bspw. vorgegebenes *ep₀* = *ep*ₘₐₓ = 14. Deshalb lautet der erste Deskriptor DP = 0x4F, da hier N das linke und die Differenz der Korrekturfähigkeiten ep das rechte Halb-Byte darstellen, wobei das zweite Halb-Byte F signed hexadezimal -7 also ep=14-7=7 bedeutet. Die nächste Untermenge besteht aus zehn Codewörtern mit der Korrekturfähigkeit 4, womit der zweite Deskriptor DP = 0xAB lautet, da A unsigned hexadezimal N=10 und B signed hexadezimal -3 also ep=7-3=4 bedeuten. Der dritte Deskriptor lautet DP = 0x49 und die letzten beiden Deskriptoren sind DP = 0x63 und DP = 0x7E. Diese Deskriptoren lauten also insgesamt (0x4F, 0xAB, 0x49, 0x63, 0x7E).

Nach der 18. Zeile, also nach dem Deskriptor 0x49, wird die Beschreibung für ein erstes Trenn-Element eingefügt. Das Trennelement besteht aus einem Datenblockende-Deskriptor in Form eines Nullbytes (0x00) und einem Füllbit-Deskriptor in Form eines nachfolgenden Bytes (0x03) mit dem Stuffingindikator S1=3. Dann folgen die Deskriptoren für den zweiten Datenblock B2, und schließlich wird das Trennelement (0x00, 0x0A) mit Nullbyte und Stuffingindikator=10 bzw. A signalisiert. Die Deskriptoren, inkl. dem noch zu erstellenden ersten passen alle in eine Zeile, deshalb reicht ein Signalisierungsblock mit z1=1 Zeilen und es wird am Anfang der Deskriptoren ein Signalisierungs- Deskriptor D1= (0x10) eingesetzt. Insgesamt lauten die Deskriptoren hier also D1...D10= (0x10, 0x4F, 0xAB, 0x49, 0x0, 0x3, 0x63, 0x7E, 0x0, 0xA).

Da die Anzahl der Codeworte z, d.h. die Größe der Payload jedes Packets, dem Decoder bekannt ist, kann immer ermittelt werden, ob noch Deskriptoren folgen können oder die Decodierung der Deskriptoren beendet werden kann.
Es gibt also nicht mehr nur eine Matrix, die alles enthält, sondern eine z1xN Matrix, die die Signalisierung enthält, und eine z2xN Matrix, die die zu schützenden Daten enthält. Diese Matrix wird zu einer (z1+z2)xN Matrix zusammengesetzt, wobei der obere Teil der Matrix aus der Signalisierungsmatrix besteht, wobei z=zl+z2 gilt. Um die noch verbleibende Abhängigkeit zwischen Datenmatrix und Signalisierungsmatrix zu eliminieren, muss die Größe zl explizit signalisiert werden. Das wird bspw. dadurch erreicht, dass der Deskriptor D1=(0,z1) den anderen Deskriptoren aus vorausgesandt wird. In die Reihe der bekannten Deskriptoren wird dann nach der Signalisierung eines Teils des Fehlerschutzprofils EPP der sonst unbenutzte Deskriptor (0,0) und einen sogenannter Stuffingindikator (S) zur Signalisierung der Anzahl der Füllbits eingefügt. Der Deskriptor (0,0) signalisiert das Ende eines Übertragungsblocks im Datenteil der Matrix, d.h. das durch die vor (0,0) stehenden Deskriptoren spezifizierte EPP beschreibt eine eigenständige Teilmatrix m1xN in der Datenmatrix z2xN. Der darauffolgende Stuffingindikator beschreibt die Anzahl S1 der zu ignorierenden Symbole bzw. Bytes in der letzten Zeile der m1xN Matrix. Anschließend werden die darauffolgenden bekannten Deskriptoren betrachtet, und wieder wird durch Einfügen von (0,0) und S2 eine m2xN Teilmatrix definiert, deren letzte S2 Symbole ignoriert werden können. Die Folge der Deskriptoren endet immer mit (0,0) und (Si), wobei dadurch die letzte Teilmatrix mixN definiert wird. Es gilt offensichtlich ml+m2+...+mi=z2.

Durch die Erfindung werden z. B. folgende Probleme vermieden:
1. Wenn die Signalisierung des EPP zusammen mit den zu schützenden Daten in eine Matrix eingeschrieben werden, ergeben sich Probleme durch die Abhängigkeiten zwischen den zu schützenden Daten und der Signalisierung. Häufig ist der Umfang der zu schützenden Daten kleiner als der für diese Daten zur Verfügung stehende Bereich. Eine Möglichkeit den Bereich optimal auszunutzen besteht darin, dass das Redundanzprofil umwandelt wird und für zusätzlichen Schutz verwendet wird. In diesem Fall wird sich die Signalisierung des EPP verändern und ggf. um einen Deskriptor wachsen. Dafür sind aber zwei zusätzliche Symbole in der Matrix erforderlich, was nicht möglich ist, wenn nur Platz für ein Symbol vorhanden ist. Also kann der unbenutzte Bereich nicht ausgenutzt werden. Das ist aber nicht nur eine Verschwendung von Ressourcen, sondern führt noch zu weiteren Problemen.
2. Es kann der Fall auftreten, dass das EPP vorgegeben ist, z.B. wenn man wie bei der sogenannten "equal erasure protection" fordert, dass die Korrekturfähigkeiten aller Codewörter in jeder Zeile gleich sind. Da die zu schützenden Daten ebenfalls eine vorgegebene Größe haben, kann man im allgemeinen nicht erreichen, dass alle Felder in der Matrix verwendet werden. Das führt in der Praxis jedoch dazu, dass der genaue Datenstrom, der in die Matrix eingeschrieben wurde, beim Empfänger nicht wieder rekonstruiert werden kann, auch wenn kein Paket bei der Übertragung verloren geht, da dem Empfänger die genauen Informationen fehlen, welcher Teil der Matrix für die Daten und welcher überhaupt nicht verwendet wurde.
3. Schließlich kann es noch vorkommen, dass mehrere unabhängige Elemente in die Matrix als zu schützende Daten eingefüllt werden. Diese können manchmal nur rekonstruiert werden, wenn der Anfang jedes Elementes bekannt ist. Das trifft z.B. bei zwei Videoframes zu: Jedem Frame kann ein RTP-Payload Header vorausgehen, der für den zweiten Frame u.U. nicht mehr zu finden ist, wenn man die beiden Datenströme aneinanderhängt und als einen Datenstrom betrachtet.

## Patentansprüche

1. Verfahren zur Fehlerkorrektur bei einer paketorientierten Datenübertragung mit durch Deskriptoren beschriebenen Übertragungsblöcken, wobei pro Übertragungsblock ein Fehlerschutzprofil mit Korrekturfähigkeiten einer Menge von Codeworten in dem Übertragungsblock erstellt wird, und wobei pro Übertragungsblock Deskriptoren von Untermengen unmittelbar aufeinanderfolgender Codeworte mit einer gleichen Korrekturfähigkeit derart gebildet werden, dass sie die Größe und Korrekturfähigkeit dieser Untermengen direkt oder indirekt beschreiben,
wobei ein Übertragungsblock **dadurch** definiert in getrennte Datenblöcke aufgeteilt wird, dass ein Ende des jeweiligen Datenblockes durch einen jeweiligen Datenblockende-Deskriptor mit einem reservierten Deskriptorwert markiert wird, und nach einem jeweiligen Datenblockende-Deskriptor ein jeweiliger Füllbit-Deskriptor eingefügt wird, welcher eine Anzahl Füllbits am Ende des jeweiligen Datenblocks spezifiziert.

2. Verfahren nach Anspruch 1,
bei dem der Übertragungsblock **dadurch** definiert in einen Signalisierungsblock mit den Deskriptoren und in die getrennten Datenblöcke aufgeteilt wird, dass definiert an erster Stelle im Signalisierungsblock ein Signalisierungs-Deskriptor eingefügt wird, der die für den Signalisierungsblock benötigte Zeilenzahl spezifiziert.

3. Verfahren nach Anspruch 1 oder 2,
bei dem alle Deskriptoren das selbe Format aufweisen.

## Claims

1. Method for error correction in packet-oriented data transmission using transmission blocks that are described by descriptors, whereby for each transmission block an error protection profile having the correction capabilities of a set of code words is created in the transmission block, and whereby for each transmission block descriptors for subsets of immediately sequenced code words having the same correction capability are formed in such a manner that they directly or indirectly describe the size and correction capability of these subsets,
whereby as a result the transmission block is divided in a defined manner into separate data blocks such that an end of the respective data block is marked by means of a respective end of data block descriptor which has a reserved descriptor value, and a respective filler bit descriptor which specifies the number of filler bits at the end of the respective data block is inserted in a defined manner after a respective end of data block descriptor.

2. Method according to claim 1,
whereby the transmission block is divided up in a defined manner by this means into a signalling block containing the descriptors and into the separate data blocks, such that a signalling descriptor which specifies the number of rows required for the signalling block is inserted in a defined manner at the first position in the signalling block.

3. Method according to claim 1 or 2,
whereby all descriptors have the same format.

## Revendications

1. Procédé de correction d'erreurs lors d'une transmission de données orientée paquets au moyen de blocs de transmission décrits par des descripteurs, un profil de protection contre les erreurs regroupant des capacités de correction d'un ensemble de mots de code dans le bloc de transmission étant établi pour chaque bloc de transmission et des descripteurs de sous-ensembles de mots de code se succédant directement et ayant une capacité de correction identique étant formés, pour chaque bloc de transmission, de manière à décrire directement ou indirectement la grandeur et la capacité de correction de ces sous-ensembles,
dans lequel on divise un bloc de transmission en blocs de données séparés, d'une manière définie, en marquant une extrémité du bloc de données respectif grâce à un descripteur d'extrémité de bloc de données respectif ayant une valeur de descripteur réservée et en insérant, après un descripteur d'extrémité de bloc de données respectif, un descripteur de bit de remplissage respectif qui spécifie un nombre de bits de remplissage à l'extrémité du bloc de données respectif.

2. Procédé selon la revendication 1,
dans lequel on divise le bloc de transmission en un bloc de signalisation contenant les descripteurs et en les blocs de données séparés, d'une manière définie, en insérant de manière définie à la première place dans le bloc de signalisation un descripteur de signalisation qui spécifie le nombre de lignes nécessaires pour le bloc de signalisation.

3. Procédé selon la revendication 1 ou 2,
dans lequel tous les descripteurs ont le même format.
